# FASCICULE DE BREVET EUROPEEN

(11) **EP 4 410 401 B1**
(45) Date de publication et mention de la délivrance du brevet: **06.08.2025**
(21) Numéro de dépôt: 24150740.9
(22) Date de dépôt: 08.01.2024
(51) Int. Cl.: B01D 53/00, B01D 53/14, B01D 53/22, F25J 3/06, F25J 3/02

(54) **PROCÉDÉ ET APPAREIL DE SÉPARATION D'UN MÉLANGE D HYDROGÈNE ET DE DIOXYDE DE CARBONE**
VERFAHREN UND VORRICHTUNG ZUR TRENNUNG EINES GEMISCHES AUS WASSERSTOFF UND KOHLENDIOXID
METHOD AND APPARATUS FOR SEPARATING A MIXTURE OF HYDROGEN AND CARBON DIOXIDE

(30) Priorité: 12.01.2023 FR 2300297
(43) Date de publication de la demande: 07.08.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: PERE, Félix, 94503 CHAMPIGNY SUR MARNE (FR); LECLERC, Mathieu, 94503 CHAMPIGNY SUR MARNE (FR)
(74) Mandataire: Air Liquide

(56) Documents cités:
- EP-A1- 4 357 003
- FR-A1- 2 877 939
- FR-A1- 3 052 684
- US-A1- 2011 023 539
- US-A1- 2011 138 852

## Description

La présente invention est relative à un procédé et appareil de séparation d'un mélange d'hydrogène et de dioxyde de carbone en particulier d'un mélange comprenant également au moins un autre composant, tel que le monoxyde de carbone, le méthane ou l'azote. Le mélange peut éventuellement comprendre de l'eau.

Il présente un avantage particulier pour de tels procédés dans lequel le mélange à séparer a été précédemment séparé par adsorption, par exemple dans un PSA H2, pour produire un gaz enrichi en hydrogène et appauvri en dioxyde de carbone et ce mélange sous forme gazeuse qui est appauvri en hydrogène et enrichi en dioxyde de carbone par rapport au gaz traité dans l'adsorption.

Pour de tels procédés équipés de turbines, l'invention permet de réduire la charge du procédé de séparation de manière stable et performant.

Le procédé d'adsorption qui produit le mélange à séparer traite souvent un gaz issu d'un procédé de production d'hydrogène, par exemple un procédé de reformage tel qu'un reformeur à vapeur d'eau et à méthane connu sous l'acronyme SMR, un reformeur autothermique connu sous l'acronyme ATR ou une oxydation partielle connue sous l'acronyme POX.

FR3052684 A1 décrit un procédé de séparation d'un mélange contenant du dioxyde de carbone, de l'eau ainsi qu'au moins un composé choisi dans la liste : hydrogène, monoxyde de carbone, azote.

FR2877939 décrit la séparation d'un gaz résiduaire d'un PSA par condensation partielle, les incondensables de la condensation partielle étant séparés par perméation, le perméat étant recyclé en amont du PSA et le résidu est envoyé vers le reformage en tant que charge et carburant.

WO2012/064938, WO2012/064941 et WO2012/158673 décrivent la séparation par perméation d'un débit d'incondensables venant d'une séparation à basse température de CO2, impliquant la détente en turbine d'un résidu et la compression d'un perméat.

US2011/0138852 décrit des procédés dans lequel un mélange est séparé par perméation, le perméat enrichi en CO2 est séparé par condensation partielle et le résidu est détendu dans une turbine.

Selon l'invention, le procédé traite un gaz, pouvant être le gaz résiduaire appauvri en hydrogène venant d'un procédé d'adsorption, par exemple de type à bascule de pression, connu sous l'acronyme PSA. Ce gaz peut être comprimé, séché, séparé par condensation partielle et/ou distillation pour produire un fluide enrichi en CO2, un gaz résiduaire de la condensation partielle et/ou la distillation étant séparé par perméation dans deux unités membranaires.

Le cœur du procédé selon l'invention est d'associer :
- Une première séparation à basse température (en dessous de -40°C) par condensation partielle et éventuellement par distillation, permettant de récupérer et de purifier un pourcentage du CO₂ contenu dans la charge traitée, par exemple ayant un rendement d'au moins 60%,
- Une deuxième étape de traitement membranaire appliquée à au moins une partie incondensable de la partie à basse température, le traitement membranaire produisant par exemple :
   ∘ Un fluide riche en hydrogène recyclé à l'unité de production, par exemple l'unité de reformage, en amont afin de d'augmenter sa production ou réduire sa charge afin de produire la même quantité d'hydrogène, et/ou
   ∘ Un fluide de composition intermédiaire, riche en H₂ et CO₂, recyclé à la section opérant à basse température pour en récupérer le CO₂ et/ou
   ∘ Un fluide pauvre en H₂ et CO₂, renvoyé à l'unité de production d'hydrogène, typiquement pour être valorisé comme combustible.

Il est possible d'augmenter les performances de la séparation membranaire en y incorporant au moins une turbine valorisant l'énergie de pression du résidu des membranes.

Selon un objet de l'invention, il est prévu un procédé de séparation d'un mélange contenant de l'hydrogène et du dioxyde de carbone, ainsi qu'au moins un composé plus léger que le dioxyde de carbone choisi dans la liste : monoxyde de carbone, méthane, azote, comprenant les étapes suivantes :
a) Refroidissement du mélange depuis une première température dans un échangeur de chaleur en envoyant le mélange à l'échangeur de chaleur, entraînant la condensation partielle du mélange en une phase liquide enrichie en dioxyde de carbone et une phase gazeuse appauvrie en dioxyde de carbone, le mélange sortant de l'échangeur de chaleur à une deuxième température inférieure à la première température, ledit échangeur de chaleur étant au moins partiellement refroidi par un fluide gazeux qui se réchauffe dans l'échangeur de chaleur par échange de chaleur indirect
b) Séparation de la phase liquide de la phase gazeuse dans un ou des pots séparateurs, éventuellement en plusieurs étapes entrecoupées de phases de refroidissement successives
c) Réchauffage d'au moins une partie de la phase gazeuse provenant d'au moins un des pots séparateurs dans l'échangeur de chaleur par échange de chaleur indirect
d) Envoi de l'au moins une partie réchauffée de l'étape c) à une unité de séparation membranaire comme seul débit d'alimentation de l'unité de séparation membranaire,
générant un ou plusieurs perméats enrichis en hydrogène et/ou dioxyde de carbone et appauvri en l'au moins un composé plus léger que le dioxyde de carbone par rapport à la partie réchauffée, et au moins un résidu appauvri en hydrogène et dioxyde de carbone et enrichi en l'au moins un composé plus léger que le dioxyde de carbone par rapport à la partie réchauffée et caractérisé en ce qu'il comprend :
e) La détente de l'au moins un résidu depuis une première pression dans une ou des turbines produisant un fluide détendu jusqu'à une deuxième pression inférieure à la première pression et jusqu'à une troisième température inférieure à la première température et de préférence à la deuxième température ou inférieure à la deuxième température,
f) Le fluide à la deuxième pression produit lors de l'étape e) constituant le fluide gazeux de l'étape a) qui se réchauffe dans l'échangeur de chaleur par échange de chaleur indirect avec le mélange et
g) l'au moins un résidu est envoyé de l'unité de séparation membranaire à la turbine ou aux turbines sans être passé dans l'échangeur de chaleur.

Selon d'autres aspects facultatifs :
- la première température est supérieure à 0°C, voire supérieure à 10°C.
- la deuxième température est inférieure à 0°C, de préférence inférieure à -30°C, voire inférieure à -40°C.
- l'unité de séparation membranaire opère à une température supérieure à 50°C et l'au moins une partie réchauffée de l'étape c) est réchauffée en aval de l'échangeur de chaleur et en amont de l'unité de séparation membranaire dans un échangeur de chaleur auxiliaire.
- le fluide détendu à la deuxième pression est envoyé à l'échangeur de chaleur sans passer par l'échangeur de chaleur auxiliaire.
- une partie de la phase gazeuse produite dans l'au moins un pot séparateur se réchauffe dans l'échangeur de chaleur et une autre partie de la phase gazeuse produite dans l'au moins un pot séparateur ne se réchauffe pas dans l'échangeur de chaleur, les deux parties étant mélangées en aval de l'échangeur de chaleur, le rapport entre les débits des deux parties étant régulé afin d'atteindre une température cible après mélange des deux parties.
- le mélange des deux parties est envoyé à l'unité de séparation membranaire.
- le mélange contenant de l'hydrogène et du dioxyde de carbone est un gaz résiduaire issu d'un procédé de séparation par adsorption, par exemple à bascule de pression.
- l'étape b) éventuellement suivie d'une étape de distillation, produit un fluide contenant au moins 60% mol de dioxyde de carbone, de préférence au moins 80% mol de dioxyde de carbone, voire au moins 90% mol de dioxyde de carbone.
- l'unité de séparation membranaire (M) produit un fluide enrichi en hydrogène qui est recyclé au procédé d'adsorption en amont afin d'augmenter sa production ou de réduire sa charge afin de produire la même quantité d'hydrogène et/ou un fluide de composition intermédiaire, enrichi en H₂ et CO₂, séparé dans au moins un des pots séparateurs et/ou par la distillation pour en récupérer le CO₂ et/ou un fluide appauvri en H₂ et CO₂, renvoyé à une unité de production d'hydrogène, alimentant le procédé d'adsorption, typiquement pour être valorisé comme combustible.
- aucune partie du ou des perméats n'est envoyée à la séparation de l'étape b).
- le résidu est envoyé à la turbine sans être passé dans une chambre à combustion.
- l'au moins une partie de la phase gazeuse ne se refroidit pas dans l'échangeur de chaleur en amont de l'unité de séparation membranaire Selon un autre objet de l'invention, il est prévu un appareil de séparation d'un mélange contenant de l'hydrogène et du dioxyde de carbone, ainsi qu'au moins un composé plus léger que le dioxyde de carbone choisi dans la liste : monoxyde de carbone, méthane, azote, comprenant un échangeur de chaleur ayant une extrémité froide et une extrémité chaude, l'extrémité froide étant adaptée pour fonctionner à une température plus froide que l'extrémité chaude, des moyens pour envoyer un mélange se refroidir depuis une première température dans l'échangeur de chaleur en envoyant le mélange à l'échangeur de chaleur, entraînant la condensation partielle du mélange en une phase liquide enrichie en dioxyde de carbone et une phase gazeuse appauvrie en dioxyde de carbone, des moyens pour sortir le mélange de l'échangeur de chaleur à une deuxième température inférieure à la première température, des moyens pour envoyer un fluide gazeux qui se réchauffe dans l'échangeur de chaleur par échange de chaleur indirect avec le mélange, une unité de condensation partielle comprenant un ou des pots séparateurs reliés en série ou en parallèle pour séparer une phase liquide d'une phase gazeuse du mélange sortant de l'échangeur, des moyens pour envoyer au moins une partie de la phase gazeuse provenant d'au moins un des pots séparateurs dans l'échangeur de chaleur pour se réchauffer par échange de chaleur indirect, une unité de séparation membranaire, des moyens pour envoyer l'au moins une partie réchauffée de la phase gazeuse à l'unité de séparation membranaire, des moyens pour sortir un ou plusieurs perméats enrichis en hydrogène et/ou dioxyde de carbone et appauvri en l'au moins un composé plus léger que le dioxyde de carbone de l'unité de séparation membranaire, des moyens pour sortir au moins un résidu appauvri en hydrogène et dioxyde de carbone et enrichi en l'au moins un composé plus léger que le dioxyde de carbone de l'unité de séparation membranaire, au moins une turbine, des moyens pour envoyer au moins une partie de l'au moins un résidu se détendre depuis une première pression dans la ou les turbines, sans être passé par l'échangeur de chaleur, produisant un fluide détendu jusqu'à une deuxième pression inférieure à la première pression à une troisième température inférieure à la première température et de préférence à la deuxième température et des moyens pour envoyer le fluide à la deuxième pression à l'échangeur de chaleur pour se réchauffer comme le fluide gazeux qui se réchauffe dans l'échangeur de chaleur par échange de chaleur indirect caractérisé en ce que le ou les pots séparateurs reliés en série ou en parallèle sont reliés directement à l'échangeur de chaleur sans passer par l'unité de séparation membranaire et les moyens pour envoyer le fluide à la deuxième pression à l'échangeur de chaleur sont reliés pour introduire le fluide à la deuxième pression dans l'échangeur de chaleur à son extrémité froide.

De préférence, les moyens pour envoyer un mélange se refroidir depuis une première température dans l'échangeur de chaleur sont reliés à l'extrémité chaude de l'échangeur de chaleur,

L'appareil peut comprendre des moyens pour envoyer une partie de la phase gazeuse à l'unité de séparation membranaire sans passer par l'échangeur de chaleur.

Selon un objet de l'invention, il est prévu un procédé de séparation d'un mélange contenant de l'hydrogène et du dioxyde de carbone, ainsi qu'au moins un composé plus léger que le dioxyde de carbone choisi dans la liste : monoxyde de carbone, méthane, azote, comprenant les étapes suivantes :
a) Refroidissement du mélange depuis une première température dans un échangeur de chaleur en envoyant le mélange à l'échangeur de chaleur, entraînant la condensation partielle du mélange en une phase liquide enrichie en dioxyde de carbone et une phase gazeuse appauvrie en dioxyde de carbone, le mélange sortant de l'échangeur de chaleur à une deuxième température inférieure à la première température, ledit échangeur de chaleur étant au moins partiellement refroidi par un fluide gazeux qui se réchauffe dans l'échangeur de chaleur par échange de chaleur indirect.
b) Séparation de la phase liquide de la phase gazeuse dans un ou des pots séparateurs, éventuellement en plusieurs étapes entrecoupées de phases de refroidissement successives.
c) Réchauffage d'au moins une partie de la phase gazeuse provenant d'au moins un des pots séparateurs dans l'échangeur de chaleur par échange de chaleur indirect.
d) Envoi de l'au moins une partie réchauffée de l'étape c) à une unité de séparation membranaire, générant un ou plusieurs perméats enrichis en hydrogène et/ou dioxyde de carbone et appauvri en l'au moins un composé plus léger que le dioxyde de carbone, et au moins un résidu appauvri en hydrogène et dioxyde de carbone et enrichi en l'au moins un composé plus léger que le dioxyde de carbone, et
e) Détente de l'au moins un résidu depuis une première pression dans une ou des turbines produisant un fluide détendu à une deuxième pression inférieure à la première pression à une troisième température inférieure à la première température et de préférence à la deuxième température.
f) Le fluide à la deuxième pression produit lors de l'étape e) constituant le fluide gazeux de l'étape a) qui se réchauffe dans l'échangeur de chaleur par échange de chaleur indirect.
g) l'au moins un résidu est envoyé de l'unité de séparation membranaire à la turbine ou aux turbines sans être passé dans l'échangeur de chaleur.

Selon d'autres aspects facultatifs :
- la première température est supérieure à 0°C, voire supérieure à 10°C.
- la deuxième température est inférieure à 0°C, de préférence inférieure à - 30°C, voire inférieure à -40°C.
- l'unité de séparation membranaire opère à une température supérieure à 50°C et l'au moins une partie réchauffée de l'étape c) est réchauffée en aval de l'échangeur de chaleur et en amont de l'unité de séparation membranaire dans un échangeur de chaleur auxiliaire.
- le fluide détendu à la deuxième pression est envoyé à l'échangeur de chaleur sans passer par l'échangeur de chaleur auxiliaire.
- une partie de la phase gazeuse produite dans l'au moins un pot séparateur se réchauffe dans l'échangeur de chaleur et une autre partie de la phase gazeuse produite dans l'au moins un pot séparateur ne se réchauffe pas dans l'échangeur de chaleur, les deux parties étant mélangées en aval de l'échangeur de chaleur, le rapport entre les débits des deux parties étant régulé afin d'atteindre une température cible après mélange des deux parties.
- le mélange des deux parties est envoyé à l'unité de séparation membranaire.
- le mélange contenant de l'hydrogène et du dioxyde de carbone est un gaz résiduaire issu d'un procédé de séparation par adsorption, par exemple à bascule de pression.
- l'étape b) éventuellement suivie d'une étape de distillation produit un fluide contenant au moins 60% mol de dioxyde de carbone, de préférence au moins 80% mol de dioxyde de carbone, voire au moins 90% mol de dioxyde de carbone.
- l'unité de séparation membranaire produit :
- un fluide enrichi en hydrogène qui est recyclé au procédé d'adsorption en amont afin d'augmenter sa production ou de réduire sa charge afin de produire la même quantité d'hydrogène et/ou
- un fluide de composition intermédiaire, enrichi en H₂ et CO₂, séparé dans au moins un des pots séparateurs et/ou par la distillation pour en récupérer le CO₂ et/ou
- un fluide appauvri en H₂ et CO₂, renvoyé à une unité de production d'hydrogène, alimentant le procédé d'adsorption, typiquement pour être valorisé comme combustible.

Selon un autre aspect de l'invention, il est prévu un appareil de séparation d'un mélange contenant de l'hydrogène et du dioxyde de carbone, ainsi qu'au moins un composé plus léger que le dioxyde de carbone choisi dans la liste : monoxyde de carbone, méthane, azote, comprenant un échangeur de chaleur, des moyens pour envoyer un mélange se refroidir depuis une première température dans l'échangeur de chaleur en envoyant le mélange à l'échangeur de chaleur, entraînant la condensation partielle du mélange en une phase liquide enrichie en dioxyde de carbone et une phase gazeuse appauvrie en dioxyde de carbone, des moyens pour sortir le mélange de l'échangeur de chaleur à une deuxième température inférieure à la première température, des moyens pour envoyer un fluide gazeux qui se réchauffe dans l'échangeur de chaleur par échange de chaleur indirect, une unité de condensation partielle comprenant un ou des pots séparateurs reliés en série ou en parallèle pour séparer une phase liquide d'une phase gazeuse du mélange sortant de l'échangeur, des moyens pour envoyer
au moins une partie de la phase gazeuse provenant d'au moins un des pots séparateurs dans l'échangeur de chaleur pour se réchauffer par échange de chaleur indirect, une unité de séparation membranaire, des moyens pour envoyer l'au moins une partie réchauffée de la phase gazeuse à l'unité de séparation membranaire, des moyens pour sortir un ou plusieurs perméats enrichis en hydrogène et/ou dioxyde de carbone et appauvri en l'au moins un composé plus léger que le dioxyde de carbone de l'unité de séparation membranaire, des moyens pour sortir au moins un résidu appauvri en hydrogène et dioxyde de carbone et enrichi en l'au moins un composé plus léger que le dioxyde de carbone de l'unité de séparation membranaire, au moins une turbine, des moyens pour envoyer au moins une partie de l'au moins un résidu se détendre depuis une première pression dans la ou les turbines produisant un fluide détendu à une deuxième pression inférieure à la première pression à une troisième température inférieure à la première température et de préférence à la deuxième température et des moyens pour envoyer
le fluide à la deuxième pression à l'échangeur de chaleur se réchauffer comme le fluide gazeux qui se réchauffe dans l'échangeur de chaleur par échange de chaleur indirect.

Selon l'invention, le gaz refroidi produit par la détente par l'au moins une turbine d'un résidu de la perméation peut servir à refroidir le mélange à séparer en amont de la séparation à basse température.

Selon une version de l'invention, cette au moins une turbine entraîne au moins un compresseur frein, alimenté par un perméat d'une étape de séparation membranaire, ce qui permet de réduire la pression de perméation.

Un avantage du schéma selon cette version est de supprimer le recours à une source de chaleur externe pour le chauffage des incondensables en amont des membranes, si celles-ci opèrent à une température nécessitant ce chauffage. En effet, la compression des perméats entraîne une élévation de température, que l'on peut valoriser dans l'échangeur multi-fluides en amont.

En fournissant plus de froid à la partie cryogénique, l'usage d'une turbine pour détendre le résidu permet de réduire la surface de l'échangeur cryogénique, ainsi que la consommation d'énergie. Cette valorisation de froid est même obligatoire, car le gaz est utilisé a minima à température ambiante pour la régénération de sécheurs avant son renvoi pour combustion.

Toutefois, cette innovation n'est pas dénuée de désavantages. En effet, la valorisation de la chaleur de compression des boosters se fait au prix de nombreuses boucles de contrôles, avec de multiples bypass redirigeant le chaud et le froid autour de l'échangeur et des machines pour stabiliser le système. Ce système complexe est encore plus déstabilisé par les variations de température des incondensables venant de la partie cryogénique, ultimement imputables aux variations de température de l'eau de refroidissement.

De plus, l'emploi de machines tournantes induit un sujet de fiabilité. En cas de défaillance ou de fonctionnement dégradé d'une des machines, il n'est plus possible de refroidir suffisamment le gaz combustible pour le valoriser dans la partie cryogénique. La surface réduite de l'échangeur se révèle vite être un frein limitant grandement la capacité et les performances de l'unité.

Selon une variante de l'invention, il est possible de résoudre les deux problèmes susmentionnés, et repose sur le concept suivant: ne pas valoriser les frigories apportées par la turbine dans la partie cryogénique comme une réduction de surface d'échange.

Plus spécifiquement, cette variante de l'invention proposée consiste à ne pas réchauffer l'ensemble des incondensables de la condensation partielle dans l'échangeur cryogénique, et donc d'extraire à température cryogénique une quantité d'incondensables correspondant au moins au froid apporté par le fluide turbiné.

L'invention sera décrite de manière plus détaillée en se référant à la figure.

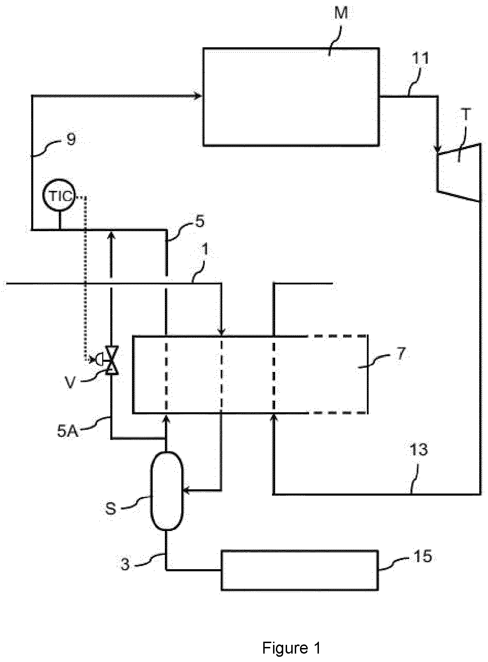

[FIG.1] décrit un procédé de séparation selon l'invention.

Un mélange 1 de la [FIG.1] contenant de l'hydrogène et du dioxyde de carbone, ainsi qu'au moins un composé plus léger que le dioxyde de carbone choisi dans la liste : monoxyde de carbone, méthane, azote, est à une pression d'au moins 5 bars a et une première température supérieure à 0°C, voire supérieure à 10°C. Le mélange 1 peut être un gaz résiduaire appauvri en hydrogène venant d'un procédé d'adsorption, par exemple par bascule de pression de type PSA.

Le mélange 1 est refroidi jusqu'à une deuxième température inférieure à 0°C, de préférence inférieure à -30°C, voire inférieure à -40°C et partiellement condensé dans un échangeur de chaleur 7 en parcourant l'échangeur d'une extrémité à l'autre et le fluide diphasique formé est séparé dans un séparateur de phase S formant un gaz 5 et un liquide 3. Le liquide 3 enrichi en dioxyde de carbone est séparé dans une unité de séparation 15 à une température inférieure à -40°C par condensation partielle et/ou par distillation pour former un produit riche en dioxyde de carbone. Sinon le liquide 3 peut être le produit riche en dioxyde de carbone de la séparation. Ici l'unité de condensation partielle ne comprend qu'un seul séparateur de phases mais il sera compris que l'unité peut comprend plusieurs séparateurs de phases S en série ou en parallèle.

Le gaz 5 se réchauffe dans l'échangeur de chaleur 7, par échange de chaleur indirect avec le mélange 1, jusqu'à une température supérieure à 0°C mais de préférence inférieure à 80°C, voire à 50°C. Le gaz 9, éventuellement après une étape de réchauffage, est séparé par perméation dans une unité de perméation M où se produit au moins une étape de perméation produisant au moins un perméat 10 enrichi en dioxyde de carbone et en hydrogène par rapport au gaz 9 et appauvri en l'au moins un composé plus léger que le dioxyde de carbone par rapport au gaz 9et au moins un résidu 11 appauvri en dioxyde de carbone et en hydrogène par rapport au gaz 9 et enrichi en l'au moins un composé plus léger que le dioxyde de carbone par rapport au gaz 9.

L'unité de séparation membranaire M peut opérer à une température supérieure à 50°C et l'au moins une partie réchauffée de l'étape c) est réchauffée en aval de l'échangeur de chaleur et en amont de l'unité de séparation membranaire dans un échangeur de chaleur auxiliaire (non illustré).

Le résidu est détendu dans une turbine T ou plusieurs turbines en série pour réduire sa pression et abaisser sa température jusqu'à une température d'au plus 0°C. Sans avoir été réchauffé, le résidu détendu 13 est envoyé à l'échangeur de chaleur 7, voire l'extrémité froide de l'échangeur de chaleur 7 où il se réchauffe depuis une troisième température, inférieure à la première température, voire à la deuxième température, en parcourant l'échangeur, par exemple d'une extrémité à l'autre, à contre-courant avec le mélange 1 par échange de chaleur indirect avec celui-ci. Le débit détendu et réchauffé 13 est pauvre en H₂ et CO₂, mais peut être renvoyé à une unité de production d'hydrogène, alimentant le PSA, typiquement pour être valorisé comme combustible.

Si l'échangeur de chaleur auxiliaire est présent, le fluide 13 détendu à la deuxième pression est envoyé à l'échangeur de chaleur 7 sans passer par l'échangeur de chaleur auxiliaire.

Selon cette version de l'invention, tout le gaz 5 est envoyé se réchauffer dans l'échangeur de chaleur 7 en parcourant l'échangeur d'une extrémité à l'autre, à contre-courant avec le mélange 1.

Selon une autre variante, une partie 5A du gaz du séparateur S est envoyée à travers une vanne V et ne se réchauffe pas dans l'échangeur de chaleur 7, ou ne se réchauffe que partiellement dans l'échangeur de chaleur 7, étant alors extrait à un niveau intermédiaire de l'échangeur de chaleur 7. Les deux gaz, dont le gaz 5 réchauffé (ou partiellement réchauffé) et le gaz 5A non-réchauffé, sont mélangés en aval de l'échangeur de chaleur pour former un gaz 9 plus froid que le gaz 5. La température du gaz 9 est variée en ajustant les débits relatifs des gaz 5, 5A avec la vanne V.

En rejetant volontairement le froid de la partie 5A, on se prive partiellement des bénéfices de la détente dans la turbine T sur le plan de l'intégration thermique. Mais ceci a plusieurs contreparties :
- En ne valorisant pas les frigories supplémentaires comme une réduction de la surface d'échange, on garde un échangeur 7 pouvant éventuellement se passer du froid venant de la turbine T ou des turbines T en cas de défaillance. L'unité est donc plus robuste.
- Grâce à ce rejet de froid vers l'extrémité chaude de la section opérant à basse température, il est possible de réguler la température du gaz 9 que l'on renvoie à la partie membranaire M. Ce faisant, on peut lisser les variations de températures induites par les variations du fluide 1 qui provient le plus souvent d'un échangeur de chaleur avec un fluide ambiant comme de l'eau de refroidissement ou de l'air. En conséquence, les boucles de contrôle autour de la turbine T opèrent à température fixée, et donc avec beaucoup moins de variations. Le système est donc stabilisé et fiabilisé. Cet avantage est encore plus patent si l'unité de séparation membranaire M comprend au moins un surpresseur de perméat couplé à au moins une turbine de résidu T.

## Revendications

1. Procédé de séparation d'un mélange contenant de l'hydrogène et du dioxyde de carbone, ainsi qu'au moins un composé plus léger que le dioxyde de carbone choisi dans la liste : monoxyde de carbone, méthane, azote, comprenant les étapes suivantes :
a) Refroidissement du mélange (1) depuis une première température dans un échangeur de chaleur (7) en envoyant le mélange à l'échangeur de chaleur, entraînant la condensation partielle du mélange en une phase liquide enrichie en dioxyde de carbone (3) et une phase gazeuse appauvrie en dioxyde de carbone (5), le mélange sortant de l'échangeur de chaleur à une deuxième température inférieure à la première température, ledit échangeur de chaleur étant au moins partiellement refroidi par un fluide gazeux (13) qui se réchauffe dans l'échangeur de chaleur par échange de chaleur indirect
b) Séparation de la phase liquide (3) de la phase gazeuse (5) dans un ou des pots séparateurs (S), éventuellement en plusieurs étapes entrecoupées de phases de refroidissement successives
c) Réchauffage d'au moins une partie de la phase gazeuse (5) provenant d'au moins un des pots séparateurs dans l'échangeur de chaleur par échange de chaleur indirect
d) Envoi de l'au moins une partie réchauffée (9) de l'étape c) à une unité de séparation membranaire (M) comme seul débit d'alimentation de l'unité de séparation membranaire (M),
générant un ou plusieurs perméats (10) enrichis en hydrogène et/ou dioxyde de carbone et appauvri en l'au moins un composé plus léger que le dioxyde de carbone par rapport à la partie réchauffée, et au moins un résidu (11) appauvri en hydrogène et dioxyde de carbone et enrichi en l'au moins un composé plus léger que le dioxyde de carbone par rapport à la partie réchauffée et **caractérisé en ce qu'**il comprend :
e) La détente de l'au moins un résidu depuis une première pression dans une ou des turbines (T) produisant un fluide (13) détendu jusqu'à une deuxième pression inférieure à la première pression et jusqu'à une troisième température inférieure à la première température et de préférence à la deuxième température ou inférieure à la deuxième température,
f) Le fluide à la deuxième pression produit lors de l'étape e) constituant le fluide gazeux de l'étape a) qui se réchauffe dans l'échangeur de chaleur par échange de chaleur indirect avec le mélange et
g) l'au moins un résidu est envoyé de l'unité de séparation membranaire à la turbine ou aux turbines sans être passé dans l'échangeur de chaleur.

2. Procédé selon la revendication 1 dans lequel la première température est supérieure à 0°C, voire supérieure à 10°C.

3. Procédé selon la revendication 1 ou 2 dans lequel la deuxième température est inférieure à 0°C, de préférence inférieure à -30°C, voire inférieure à -40°C.

4. Procédé selon l'une des revendications précédentes dans lequel l'unité de séparation membranaire (M) opère à une température supérieure à 50°C et l'au moins une partie réchauffée (5) de l'étape c) est réchauffée en aval de l'échangeur de chaleur et en amont de l'unité de séparation membranaire dans un échangeur de chaleur auxiliaire.

5. Procédé selon la revendication 4 dans lequel le fluide (13) détendu à la deuxième pression est envoyé à l'échangeur de chaleur (7) sans passer par l'échangeur de chaleur auxiliaire.

6. Procédé selon l'une des revendications précédentes dans lequel une partie (5) de la phase gazeuse produite dans l'au moins un pot séparateur se réchauffe dans l'échangeur de chaleur et une autre partie (5A) de la phase gazeuse produite dans l'au moins un pot séparateur ne se réchauffe pas dans l'échangeur de chaleur, les deux parties étant mélangées en aval de l'échangeur de chaleur, le rapport entre les débits des deux parties étant régulé afin d'atteindre une température cible après mélange des deux parties.

7. Procédé selon la revendication 6 dans lequel le mélange des deux parties (5, 5A) est envoyé à l'unité de séparation membranaire (M).

8. Procédé selon l'une des revendications précédentes dans lequel le mélange (1) contenant de l'hydrogène et du dioxyde de carbone est un gaz résiduaire issu d'un procédé de séparation par adsorption, par exemple à bascule de pression.

9. Procédé selon la revendication 8 dans lequel l'unité de séparation membranaire (M) produit un fluide (10) enrichi en hydrogène qui est recyclé au procédé d'adsorption en amont afin d'augmenter sa production ou de réduire sa charge afin de produire la même quantité d'hydrogène et/ou un fluide de composition intermédiaire, enrichi en H₂ et CO₂, séparé dans au moins un des pots séparateurs et/ou par la distillation pour en récupérer le CO₂ et/ou un fluide (11) appauvri en H₂ et CO₂, renvoyé à une unité de production d'hydrogène, alimentant le procédé d'adsorption, typiquement pour être valorisé comme combustible.

10. Procédé selon une des revendications précédentes dans lequel aucune partie du ou des perméats n'est envoyée à la séparation de l'étape b).

11. Procédé selon une des revendications précédentes dans lequel le résidu est envoyé à la turbine sans être passé dans une chambre à combustion.

12. Procédé selon une des revendications précédentes dans lequel l'au moins une partie (5) de la phase gazeuse ne se refroidit pas dans l'échangeur de chaleur (7) en amont de l'unité de séparation membranaire (M).

13. Appareil de séparation d'un mélange (1) contenant de l'hydrogène et du dioxyde de carbone, ainsi qu'au moins un composé plus léger que le dioxyde de carbone choisi dans la liste : monoxyde de carbone, méthane, azote, comprenant un échangeur de chaleur (7) ayant une extrémité froide et une extrémité chaude, l'extrémité froide étant adaptée pour fonctionner à une température plus froide que l'extrémité chaude, des moyens pour envoyer un mélange se refroidir depuis une première température dans l'échangeur de chaleur en envoyant le mélange à l'échangeur de chaleur, entraînant la condensation partielle du mélange en une phase liquide enrichie en dioxyde de carbone et une phase gazeuse appauvrie en dioxyde de carbone, des moyens pour sortir le mélange de l'échangeur de chaleur à une deuxième température inférieure à la première température, des moyens pour envoyer un fluide gazeux qui se réchauffe dans l'échangeur de chaleur par échange de chaleur indirect avec le mélange, une unité de condensation partielle comprenant un ou des pots séparateurs (S) reliés en série ou en parallèle pour séparer une phase liquide (3) d'une phase gazeuse (5) du mélange sortant de l'échangeur, des moyens pour envoyer au moins une partie de la phase gazeuse provenant d'au moins un des pots séparateurs dans l'échangeur de chaleur pour se réchauffer par échange de chaleur indirect, une unité de séparation membranaire (M), des moyens pour envoyer l'au moins une partie réchauffée (9) de la phase gazeuse à l'unité de séparation membranaire, des moyens pour sortir un ou plusieurs perméats (10) enrichis en hydrogène et/ou dioxyde de carbone et appauvri en l'au moins un composé plus léger que le dioxyde de carbone de l'unité de séparation membranaire, des moyens pour sortir au moins un résidu (11) appauvri en hydrogène et dioxyde de carbone et enrichi en l'au moins un composé plus léger que le dioxyde de carbone de l'unité de séparation membranaire, au moins une turbine (T), des moyens pour envoyer au moins une partie de l'au moins un résidu se détendre depuis une première pression dans la ou les turbines, sans être passé par l'échangeur de chaleur, produisant un fluide (13) détendu jusqu'à une deuxième pression inférieure à la première pression à une troisième température inférieure à la première température et de préférence à la deuxième température et des moyens pour envoyer le fluide à la deuxième pression à l'échangeur de chaleur pour se réchauffer comme le fluide gazeux qui se réchauffe dans l'échangeur de chaleur par échange de chaleur indirect **caractérisé en ce que** le ou les pots séparateurs (S) reliés en série ou en parallèle sont reliés directement à l'échangeur de chaleur sans passer par l'unité de séparation membranaire et les moyens pour envoyer le fluide à la deuxième pression à l'échangeur de chaleur sont reliés pour introduire le fluide à la deuxième pression dans l'échangeur de chaleur à son extrémité froide.

14. Appareil selon la revendication 14 comprenant des moyens pour envoyer une partie (5A) de la phase gazeuse à l'unité de séparation membranaire (M) sans passer par l'échangeur de chaleur (7).

## Patentansprüche

1. Verfahren zur Trennung eines Gemisches, das Wasserstoff und Kohlendioxid sowie mindestens eine Verbindung, die leichter als Kohlendioxid ist, ausgewählt aus der Gruppe, die aus Kohlenmonoxid, Methan und Stickstoff besteht, enthält, umfassend die folgenden Schritte
a) Abkühlen des Gemischs (1) von einer ersten Temperatur in einem Wärmetauscher (7) durch Zuführen des Gemischs zu dem Wärmetauscher, wodurch eine teilweise Kondensation des Gemischs in eine an Kohlendioxid angereicherte flüssige Phase (3) und eine an Kohlendioxid verarmte gasförmige Phase (5) bewirkt wird, wobei das Gemisch den Wärmetauscher mit einer zweiten Temperatur verlässt, die niedriger ist als die erste Temperatur, wobei der Wärmetauscher mindestens teilweise gekühlt durch ein gasförmiges Fluid (13), das sich im Wärmetauscher durch indirekten Wärmeaustausch erwärmt
b) Trennung der flüssigen Phase (3) von der gasförmigen Phase (5) in einem oder mehreren Abscheidertöpfen (S), eventuell in mehreren Stufen, die mit aufeinanderfolgenden Kühlphasen durchsetzt sind.
c) Erwärmung mindestens eines Teils der Gasphase (5), die aus mindestens einem der Abscheidertöpfe im Wärmetauscher kommt, durch indirekten Wärmeaustausch.
d) Der mindestens eine erhitzte Teil (9) aus Schritt c) wird zu einer Membrantrenneinheit (M) als einziger Speisestrom zu der Membrantrenneinheit (M) geschickt,wobei ein oder mehrere Permeate (10), die an Wasserstoff und/oder Kohlendioxid angereichert und an mindestens einer Verbindung, die leichter als Kohlendioxid ist, in Bezug auf den erhitzten Teil abgereichert sind, und mindestens ein Rückstand (11), der an Wasserstoff und Kohlendioxid abgereichert und an mindestens einer Verbindung, die leichter als Kohlendioxid ist, in Bezug auf den erhitzten Teil angereichert ist, erzeugt werden, **dadurch gekennzeichnet, dass** er Folgendes umfasst
e) Expansion mindestens eines Reststoffes von einem ersten Druck in einer oder mehreren Turbinen (T), die ein expandiertes Fluid (13) auf einen zweiten Druck, der niedriger als der erste Druck ist, und auf eine dritte Temperatur, die niedriger als der ersten Temperatur und vorzugsweise bei oder unter der zweiten Temperatur,
f) Das in Schritt e) erzeugte Fluid mit dem zweiten Druck ist das gasförmige Fluid aus Schritt a), das sich im Wärmetauscher durch indirekten Wärmeaustausch erwärmt. mit der Mischung und
g) der mindestens eine Rückstand wird von der Membrantrenneinheit zur Turbine oder zu den Turbinen geleitet, ohne den Wärmetauscher zu passieren.

2. Verfahren nach Anspruch 1, bei dem die erste Temperatur größer als 0°C oder sogar größer als 10°C ist.

3. Verfahren nach Anspruch 1 oder 2, bei dem die zweite Temperatur unter 0°C, vorzugsweise unter -30°C oder sogar unter -40°C liegt.

4. Verfahren nach einem der vorhergehenden Ansprüche, bei dem die Membrantrenneinheit (M) bei einer Temperatur von über 50°C arbeitet und der mindestens eine wiedererwärmte Teil (5) aus Schritt c) stromabwärts des Wärmetauschers wiedererwärmt wird.
und stromaufwärts der Membrantrenneinheit in einem Zusatzwärmetauscher.

5. Verfahren nach Anspruch 4, bei dem das auf den zweiten Druck entspannte Fluid (13) dem Wärmetauscher (7) zugeführt wird, ohne den Hilfswärmetauscher zu durchlaufen.

6. Verfahren nach einem der vorhergehenden Ansprüche, bei dem ein Teil der (5) der in dem mindestens einen Abscheidertopf erzeugten Gasphase im Wärmetauscher erwärmt und ein anderer Teil (5A) der in dem mindestens einen Abscheidertopf erzeugten Gasphase im Wärmetauscher nicht erwärmt, wobei die beiden Teile stromabwärts des Wärmetauschers gemischt werden, wobei das Verhältnis zwischen den Durchflussmengen der beiden Teile geregelt wird, um nach dem Mischen der beiden Teile eine Zieltemperatur zu erreichen.

7. Verfahren nach Anspruch 6, bei dem das Gemisch der beiden Teile (5, 5A) der Membrantrenneinheit (M) zugeführt wird.

8. Verfahren nach einem der vorhergehenden Ansprüche, bei dem die Mischung (1), das Wasserstoff und Kohlendioxid enthält, ist ein Abgas aus einem Adsorptionstrennverfahren, z. B. mit Druckwechseladsorption.

9. Verfahren nach Anspruch 8, bei dem die Membrantrenneinheit (M) ein wasserstoffangereichertes Fluid (10) erzeugt, das in den vorgeschalteten Adsorptionsprozess zurückgeführt wird, um dessen Produktion zu erhöhen oder dessen um die gleiche Menge Wasserstoff zu erzeugen, und/oder ein Fluid mit mittlerer Zusammensetzung, das mit H2 und CO2 angereichert ist, das in mindestens einem der Abscheidertöpfe und/oder durch Destillation abgetrennt wird, um das CO2 zurückzugewinnen, und/oder ein Fluid (11), das an H2 und CO2 verarmt ist, das zu einer Wasserstoffproduktionseinheit zurückgeführt wird, die den Adsorptionsprozess versorgt, typischerweise zur Verwendung als Brennstoff.

10. Verfahren nach einem der vorhergehenden Ansprüche, bei dem kein Teil des Permeats oder der Permeate in Schritt b) zur Abtrennung geschickt wird.

11. Verfahren nach einem der vorhergehenden Ansprüche, bei dem der Rückstand der Turbine zugeführt wird, ohne eine Brennkammer passiert zu haben.

12. Verfahren nach einem der vorhergehenden Ansprüche, bei dem der mindestens eine Teil (5) der Gasphase im Wärmetauscher (7) vor der Membrantrenneinheit (M) nicht abgekühlt wird.

13. Vorrichtung zum Trennen eines Gemisches (1), das Wasserstoff und Kohlendioxid und mindestens eine Verbindung enthält, die leichter ist als Kohlendioxid.
die aus der Gruppe ausgewählt ist, die aus Kohlenmonoxid, Methan und Stickstoff besteht, mit einem Wärmetauscher (7), der ein kaltes Ende und ein heißes Ende aufweist, wobei das kalte Ende so beschaffen ist, dass es bei einer kälteren Temperatur arbeitet als das heiße Ende, und mit Mitteln zum Zuführen eines zu kühlenden Gemisches, **dadurch gekennzeichnet, dass** der Wärmetauscher (7) ein kaltes Ende und ein heißes Ende aufweist, wobei das kalte Ende so beschaffen ist, dass es bei einer kälteren Temperatur arbeitet als das heiße Ende.
von einer Anfangstemperatur im Wärmetauscher durch Senden der Gemisch in den Wärmetauscher, wodurch eine teilweise Kondensation des Gemischs in eine mit Kohlendioxid angereicherte flüssige Phase und eine an Kohlendioxid verarmte gasförmige Phase bewirkt wird, Mittel zum Abführen des Gemischs aus dem Wärmetauscher bei einer zweiten Temperatur, die niedriger als die erste Temperatur ist, Mittel zum Zuführen eines gasförmigen Fluids, das sich in der flüssigen Phase erwärmt, zum Wärmetauscher und Mittel zum Abführen des gasförmigen Fluids, das sich in der gasförmigen Phase erwärmt, zum Wärmetauscher.
eine Teilkondensationseinheit, die einen oder mehrere in Reihe oder parallel geschaltete Abscheidertöpfe (S) umfasst, um eine flüssige Phase (3) von einer gasförmigen Phase (5) des den Austauscher verlassenden Gemischs zu trennen, Mittel, um mindestens einen Teil der aus mindestens einem der Abscheidertöpfe kommenden gasförmigen Phase in den Austauscher zu leiten, um sie durch indirekten Wärmeaustausch zu erwärmen, eine Membrantrenneinheit (M), Mittel, um den mindestens einen erwärmten Teil (9) der Gasphase in die Membrantrenneinheit zu leiten, Mittel zur Entnahme eines oder mehrerer Permeate (10), die mit Wasserstoff und/oder Kohlendioxid angereichert und an der mindestens einen Verbindung, die leichter als Kohlendioxid ist, verarmt sind, Mittel, um den mindestens einen erwärmten Teil (9) der Gasphase in die Membrantrenneinheit zu leiten, Mittel zur Entnahme eines oder mehrerer Permeate (10), die mit Wasserstoff und/oder Kohlendioxid angereichert und an der mindestens einen Verbindung, die leichter als Kohlendioxid ist, verarmt sind aus derMembrantrenneinheit, Mittel zum Entfernen von mindestens einem an Wasserstoff und Kohlendioxid verarmten und an mindestens einer Verbindung, die leichter als Kohlendioxid ist, angereicherten Rückstand (11) aus der Membrantrenneinheit, mindestens eine Turbine (T), Mittel zum Senden mindestens eines
ein Teil des mindestens einen Rückstandes durch einen ersten Druck in der Turbine oder den Turbinen expandiert, ohne den Wärmetauscher passiert zu haben, wobei ein Fluid erzeugt wird
(13) auf einen zweiten Druck, der niedriger ist als der erste Druck, bei einer dritten Temperatur, die niedriger ist als die erste Temperatur, und vorzugsweise bei der zweiten Temperatur, entspannt wird, und Mittel, um das Fluid mit dem zweiten Druck zum Wärmetauscher zu leiten, damit es sich auf die gleiche Weise erwärmt wie das gasförmige Fluid, das sich im Wärmetauscher durch indirekten Wärmeaustausch erwärmt, **dadurch gekennzeichnet, dass** der oder die Abscheidertöpfe (S), die in Reihe oder parallel geschaltet sind, direkt mit dem Wärmetauscher verbunden sind, ohne die Membrantrenneinheit zu durchlaufen, und dass die Mittel zur Zuführung des Fluids mit dem zweiten Druck zum Wärmetauscher direkt mit dem Wärmetauscher verbunden sind, ohne die Membrantrenneinheit zum Wärmetauscher zu durchlaufen, um das Fluid mit dem zweiten Druck in den Wärmetauscher an seinem kalten Ende einzuleiten.

14. Vorrichtung nach Anspruch 13, die Mittel umfasst, um einen Teil (5A) der Gasphase zur Membrantrenneinheit (M) zu leiten, ohne den Wärmetauscher (7) zu passieren.

## Claims

1. Process for separating a mixture containing hydrogen and carbon dioxide, as well as at least one compound lighter than carbon dioxide selected from the group consisting of carbon monoxide, methane and nitrogen, comprising the following steps
a) Cooling of the mixture (1) from a first temperature in a heat exchanger (7) by feeding the mixture to the heat exchanger, causing partial condensation of the mixture into a carbon dioxide-enriched liquid phase (3) and a carbon dioxide-depleted gaseous phase (5), the mixture leaving the heat exchanger at a second temperature lower than the first temperature, said heat exchanger being at least partially cooled by a gaseous fluid (13) which heats up in the heat exchanger by indirect heat exchange
b) Separation of the liquid phase (3) from the gaseous phase (5) in one or more separator pots (S), possibly in several stages interspersed with successive cooling phases.
c) Heating at least part of the gas phase (5) coming from at least one of the separator pots in the heat exchanger by indirect heat exchange.
d) The at least one heated part (9) from step c) is sent to a membrane separation unit (M) as the sole feed flow to the membrane separation unit (M),generating one or more permeates (10) enriched in hydrogen and/or carbon dioxide and depleted in at least one compound lighter than carbon dioxide with respect to the heated part, and at least one residue (11) depleted in hydrogen and carbon dioxide and enriched in at least one compound lighter than carbon dioxide with respect to the heated part and **characterised in that** it comprises
e) Expansion of at least one residue from a first pressure in one or more turbines (T) producing an expanded fluid (13) to a second pressure lower than the first pressure and to a third temperature lower than the first temperature and preferably at or below the second temperature,
f) The fluid at the second pressure produced in step e) constitutes the gaseous fluid from step a), which heats up in the heat exchanger by indirect heat exchange.
with the mixture and
g) the at least one residue is sent from the membrane separation unit to the turbine or turbines without passing through the heat exchanger.

2. Process according to claim 1 in which the first temperature is greater than 0°C, or even greater than 10°C.

3. Process according to claim 1 or 2 in which the second temperature is below 0°C, preferably below -30°C or even below -40°C.

4. Process according to one of the preceding claims in which the membrane separation unit (M) operates at a temperature above 50°C and the at least one reheated part (5) of step c) is reheated downstream of the heat exchanger.
and upstream of the membrane separation unit in an auxiliary heat exchanger.

5. Method according to claim 4 in which the fluid (13) expanded to the second pressure is sent to the heat exchanger (7) without passing through the auxiliary heat exchanger.

6. Process according to one of the preceding claims in which a part of the (5) of the gas phase produced in the at least one separator pot heats up in the heat exchanger and another part (5A) of the gas phase produced in the at least one separator pot does not heat up in the heat exchanger, the two parts being mixed downstream of the heat exchanger, the ratio between the flow rates of the two parts being regulated in order to reach a target temperature after mixing the two parts.

7. Process according to claim 6 in which the mixture of the two parts (5, 5A) is sent to the membrane separation unit (M).

8. Process according to one of the preceding claims in which the mixture (1) containing hydrogen and carbon dioxide is a waste gas from an adsorption separation process, for example with pressure swing adsorption.

9. Process according to claim 8 in which the membrane separation unit (M) produces a hydrogen-enriched fluid (10) which is recycled to the upstream adsorption process in order to increase its production or reduce its charge in order to produce the same quantity of hydrogen and/or a fluid of intermediate composition, enriched in H2 and CO2, separated in at least one of the separator pots and/or by distillation in order to recover the CO2 and/or a fluid (11) depleted in H2 and CO2, returned to a hydrogen production unit, supplying the adsorption process, typically for use as a fuel.

10. Process according to one of the preceding claims in which no part of the permeate or permeates is sent for separation in step b).

11. Process according to one of the preceding claims in which the residue is sent to the turbine without having passed through a combustion chamber.

12. Process according to one of the preceding claims in which the at least one part (5) of the gaseous phase does not cool in the heat exchanger (7) upstream of the membrane separation unit (M).

13. Apparatus for separating a mixture (1) containing hydrogen and carbon dioxide and at least one compound which is lighter than carbon dioxide.
selected from the group consisting of carbon monoxide, methane and nitrogen, comprising a heat exchanger (7) having a cold end and a hot end, the cold end being adapted to operate at a colder temperature than the hot end, means for supplying a mixture to be cooled, **characterised in that** the heat exchanger (7) has a cold end and a hot end, the cold end being adapted to operate at a colder temperature than the hot end.
from an initial temperature in the heat exchanger by sending the mixture to the heat exchanger, causing partial condensation of the mixture into a liquid phase enriched in carbon dioxide and a gaseous phase depleted in carbon dioxide, means for discharging the mixture from the heat exchanger at a second temperature lower than the first temperature, means for sending a gaseous fluid which heats up in the liquid phase to the heat exchanger, and means for discharging the gaseous fluid which heats up in the gaseous phase to the heat exchanger.
the heat exchanger by indirect heat exchange with the mixture, a partial condensation unit comprising one or more separator pots (S) connected in series or in parallel to separate a liquid phase (3) from a gaseous phase (5) of the mixture leaving the exchanger, means for sending at least part of the gaseous phase coming from at least one of the separator pots into the exchanger to be heated by indirect heat exchange, a membrane separation unit (M), means for sending the at least one heated part (9) of the gaseous phase to the membrane separation unit, means for removing one or more permeates (10) enriched in hydrogen and/or carbon dioxide and depleted in the at least one compound lighter than carbon dioxide, means for sending the at least one heated part (9) of the gaseous phase to the membrane separation unit, means for removing one or more permeates (10) enriched in hydrogen and/or carbon dioxide and depleted in the at least one compound lighter than carbon dioxide from the membrane separation unit, means for removing at least one residue (11) depleted in hydrogen and carbon dioxide and enriched in at least one compound lighter than carbon dioxide from the membrane separation unit, at least one turbine (T), means for sending at least one part of the at least one residue expand from a first pressure in the turbine or turbines, without having passed through the heat exchanger, producing a fluid
(13) expanded to a second pressure lower than the first pressure at a third temperature lower than the first temperature and preferably at the second temperature and means for sending the fluid to the second pressure to the heat exchanger in order to heat up in the same way as the gaseous fluid which heats up in the heat exchanger by indirect heat exchange, **characterised in that** the separator pot or pots (S) connected in series or in parallel are connected directly to the heat exchanger without passing through the membrane separation unit and the means for sending the fluid at the second pressure to the heat exchanger are connected directly to the heat exchanger without passing through the membrane separation unit to the heat exchanger are connected to introduce the fluid at the second pressure into the heat exchanger at its cold end.

14. Apparatus as claimed in claim 13 comprising means for sending part (5A) of the gas phase to the membrane separation unit (M) without passing through the heat exchanger (7).
